# EUROPÄISCHE PATENTSCHRIFT

(11) **EP 2 523 986 B1**
(45) Veröffentlichungstag und Bekanntmachung des Hinweises auf die Patenterteilung: **12.07.2017**
(21) Anmeldenummer: 10781905.4
(22) Anmeldetag: 25.11.2010
(51) Int. Cl.: C08G 18/08, C08G 18/18, C08G 18/28, C09J 175/04

(54) **1K- KASCHIERKLEBSTOFF MIT SILANVERNETZUNG**
ONE-COMPONENT LAMINATING ADHESIVE HAVING SILANE CROSS-LINKING
RÉSINE COLLE MONOCOMPOSANT AVEC RÉTICULATION SILANE

(30) Priorität: 14.01.2010 DE 102010000881
(43) Veröffentlichungstag der Anmeldung: 21.11.2012
(73) Patentinhaber: Henkel AG & Co. KGaA, 40589 Düsseldorf (DE)
(72) Erfinder: KINZELMANN, Hans-Georg, 50259 Pulheim (DE); GENTSCHEV, Pavel, 4823 Bad Goisern (DE)
(86) Internationale Anmeldenummer: PCT/EP2010/068192
(87) Internationale Veröffentlichungsnummer: WO 2011/085850

(56) Entgegenhaltungen:
- EP-A1- 1 550 704
- EP-A1- 1 816 168
- DE-A1- 2 307 794

## Beschreibung

Die Erfindung betrifft einen Klebstoff auf Basis von Polyesterprepolymeren und /oder Polyurethanprepolymeren enthaltend hydrolisierbare Silangruppen zum Verkleben von flächigen Substraten. Die Erfindung betrifft weiter die Verwendung dieses Klebstoffs als Kaschierklebstoff für Mehrschichtfolien.

Transparente NCO-vemetzende 1-Komponenten-Klebstoffe als Umsetzungsprodukt aus Polyolen und Isocyanaten sind in der EP 0464483 bekannt Dort werden Isocyanate eingesetzt, die Harnstoffgruppen aufweisen. Solche Harnstoffgruppen geben eine hohe Wasserstoffbrückenbindung und damit meist eine hohe Viskosität des Polymeren. Außerdem führen monomere Isocyanate bei der Polymerherstellung zu einem Restmonomergehalt an gesundheitsschädlichen Isocyanaten, der durch zusätzliche Maßnahmen vermindert werden muss.

Weiterhin ist die US 5990257 bekannt. Diese beschreibt ein Verfahren zu Herstellung von Silylgruppen aufweisenden Polyurethanen, wobei Isocyanate im Unterschuss eingesetzt werden zu Polyolen. Weitere OH-Gruppen werden dann mit Isocyanatosilanen zu Silylgruppen-haltigen Prepolymeren umgesetzt.
Die Polymere weisen ein Molekulargewicht von mehr als 12000 g/mol auf. Die Viskosität liegt oberhalb von 57 Pa.s. Als Anwendung ist eine Verwendung als Dichtungsmasse beschrieben, die nach Härtung eine niedrige Haftung aufweisen soll.

Die noch nicht veröffentlichte DE 102009026900 beschreibt Kaschierklebstoffe, die Alkohole als Lösemittel enthalten. Dafür werden Prepolymere auf Basis von Polyurethanen beschrieben, die vernetzbare Silangruppen enthalten. Diese Kleb stoffe weisen jedoch einen hohen Gehalt an Alkoholen auf, beispielsweise Methanol oder Ethanol.

Weiterhin ist die EP 1674546 bekannt. In dieser werden feuchtigkeitshärtende Zusammensetzungen beschrieben, die aus NCO-Gruppen-haltigen Polyurethanen erhalten werden, die mit nucleophil substituierten Silanen umgesetzt werden. Es wird die schnelle Reaktion dieser Klebstoffe mit Feuchtigkeit beschrieben. Die Klebstoffe werden als Schmelzklebstoffe eingesetzt, d.h. sie liegen bei Raumtemperatur als Feststoff vor und sind nur in der Wärme aufzutragen.

EP 1 550 704 A1 beschreibt einen Klebstoff enthaltend mindestens ein silylterminiertes Polymer, mindestens ein Polymer mit Anhydridfunktionalitäten, Säurefunktionalitäten oder Kombinationen davon und einen oder mehrere Katalysatoren. Jedoch wurde die Viskosität des Klebstoffs nicht expliziert offenbart. Weiterhin ist nicht offenbart, ob dieser Klebstoff für die Verwendung als Kaschierklebstoff für Mehrschichtfolien geeignet ist.

Die Zusammensetzungen des Stands der Technik haben verschiedene Nachteile bei der Anwendung als Kaschierklebstoff. Isocyanat-haltige Klebstoffe sind aus Gründen des Arbeitschutzes nicht unbedenklich. Außerdem ist eine Lagerung nur unter streng wasserfreien Bedingungen möglich. Silan-härtende Systeme enthalten oder bilden bei der Vernetzung Carbonsäuren oder Alkohole. Diese sind physiologisch ebenfalls bedenklich, auch können diese Stoffe den Inhalt von Folienverpackungen negativ beeinflussen.

Aufgabe der vorliegenden Erfindung ist es deswegen einen bei Raumtemperatur niedrigviskosen Klebstoff zur Verfügung zu stellen, der in dünner Schicht auf große Substratflächen aufgetragen werden kann. Es soll eine gute Haftung zu den Substraten aufweisen und einen schnellen Haftungsaufbau. Nach Vernetzung soll die Klebstoffschicht möglichst keine migrierbaren physiologisch bedenklichen Inhaltsstoffe aufweisen, beispielsweise keine primären aromatischen Amine oder keine Alkohole.

Die Erfindung wird gelöst durch einen vernetzbaren 1-Komponenten-Kaschierklebstoff enthaltend 25 bis 80 Gew.-% Polyesterprepolymere und /oder Polyurethanprepolymere, die mindestens zwei hydrolysierbare Alkoxysilangruppen aufweisen und das Prepolymer ein Molekulargewicht von 2000 bis 30000 g/mol besitzt, wobei mindestens 50 % Prepolymere auf Basis von Polyesterpolyolen enthalten sind, 75 bis 19 Gew.-% organische Lösemittel mit einem Siedepunkt bis 130°C, 1 bis 20 Gew.-% Polymere, Oligomere und/oder Monomere, die eine oder mehrere
Anhydridgruppen enthalten, 0 bis 15 Gew- % von Additiven, wobei die Viskosität des Klebstoffs zwischen 50 bis 20000 mPas (nach DIN ISO 2555) beträgt, gemessen bei 15 bis 45°C und die Summe aller Bestandteile 100% betragen soll.

Geeignete Polyester für die Herstellung erfindungsgemäßer Prepolymere sind die bekannten Polyesterpolyole, beispielsweise in Form von Polyesterpolyolen oder Polyurethanpolyolen, die an mindestens zwei Stellen mit bifunktionellen Silanverbindungen umgesetzt werden, die eine mit dem Polymerrückgrat reaktive Gruppe und zusätzlich mindestens eine vernetzbare Silangruppen enthalten. Insbesondere sollen die Polyesterpolyole größer/gleich zwei OH-Gruppen aufweisen.

Geeignete Polyesterpolyole sind beispielsweise durch Polykondensation herstellbar. So können difunktionelle und/oder trifunktionelle niedermolekulare Alkohole mit einem Unterschuss an Dicarbonsäuren und/oder Tricarbonsäuren kondensiert werden. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Geeignete Dicarbansäuren sind beispielsweise Bernsteinsäure, Adipinsäure, Korksäure, Azelainsäure, Sebacinsäure und ihre höhere Homologen mit bis zu 16 C-Atomen, ferner ungesättigte Dicarbonsäuren wie Maleinsäure oder Fumarsäure, Dimerfettsäure oder Trimerfettsäure oder aromatische Dicarbonsäuren, insbesondere die isomeren Phthalsauren, wie Phthalsäure, Isophthalsäure oder Terephthalsäure, Anhydride wie beispielsweise Tetrahydrophthalsäureanhydrid, Hexahydrophthalsäureanhydrid, Glutarsäureanhydrid, Maleinsäureanhydrid, oder Gemische aus zwei oder mehr solche Säuren. Als gegebenenfalls anteilsweise zusetzbare Tricarbonsäuren sind beispielsweise Zitronensäure oder Trimellithsäure geeignet. Die Mengen werden so gewählt, dass endständig OH-funktionelle Polyesterdiole erhalten werden. In einer bevorzugten Ausführungsform sind Gemische aus aliphatischen und aromatischen Carbonsäuren enthalten.

Zur Umsetzung mit den oben genannten Carbonsäuren geeignet sind insbesondere aliphatische Alkohole. Zu den geeigneten aliphatischen Alkoholen zählen bei spielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, 1,4-Hydroxymethyl-cyclohexan, 2-Methyl-1,3-propandiol, Triethylenglykol, Ethylenglykol, Polyethylenglykol, Dipropylenglykol, Polypropylenglykol, Dibutylenglykol und Polybutylenglykol

Ebenfalls geeignet sind höherfunktionelle Alkohole wie beispielsweise Glycerin, Trimethylolpropan, Pentaerythrit, Neopentylglycol sowie oligomere Ether der genannten Substanzen mit sich selbst oder im Gemisch aus zwei oder mehr der genannten Ether untereinander.

Geeignete Polyole zur Herstellung der Polyester sind auch Umsetzungsprodukte niedermolekularer polyfunktioneller Alkohole mit Alkylenoxiden, sogenannte Polyether. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Diese sollen ein Molekulargewicht von etwa 400 bis etwa 2000 g/mol aufweisen.

Ebenfalls geeignet sind Polyesterpolyole, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Lactonen, insbesondere Caprolacton, entstehen. Dabei sind auch 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol als Alkohole geeignet.

Es können aber auch Polyesterpolyole oleochemischer Herkunft verwendet werden. Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate.

Verfahren zur Herstellung solcher OH-funktioneller Polyester sind bekannt. Auch sind solche Polyesterpolyole kommerziell erhältlich.

Das Molekuargewicht geeigneter Polyole soll etwa von 400 bis 25000 g/mol betragen (zahlenmittleres Molekulargewicht, M_{N}, wie über GPC bestimmbar), insbesondere von 2000 bis 20000 g/mol. Werden Mischungen von Polyolen zur Herstellung der Prepolymere eingesetzt, sollen bevorzugt mindestens 50% Polyesterpolyole eingesetzt werden, insbesondere ausschließlich Polyesterpolyole, besonders bevorzugt Polyesterdiole mit endständigen OH-Gruppen.

In einer Ausführungsform können aus den oben beschriebenen Polyesterpolyolen durch Umsetzung mit einem Überschuss an Diisocyanaten NCO-gruppenhaltigen Prepolymere hergestellt werden. Dabei werden die Polyole in flüssiger oder aufgeschmolzener Form, ggf. auch Lösemittel enthaltend, mit Diisocyanaten umgesetzt. Das kann auch durch erhöhter Temperatur unterstützt werden, ebenso ist es bekannt, dass geringe Mengen an Katalysatoren zugesetzt werden können. Durch die Auswahl der Isocyanate und die Menge kann sichergestellt werden, dass nur geringe Anteile an freien nicht umgesetzten Diisocyanaten in der Reaktionsmischung vorhanden sind. Gegebenenfalls ist es auch möglich, überschüssige monomere Isocyanate durch Destillation abzutrennen. Solche Verfahren sind dem Fachmann bekannt. Dabei kann der Polyester nur endständige NCO-Gruppen enthalten, oder es bilden sich durch Molekuargewichtsaufbau Polyurethanprepolymere mit reaktiven NCO-Gruppen. Diese Polyurethanprepolymere sind auch zur Synthese der erfindungsgemäß einzusetzenden Silan-haltigen Prepolymere geeignet.

Als Isocyanate sind insbesondere die bekannten aliphatischen oder aromatischen Diisocyante geeignet, wie 1,6-Hexamethylendiisocyanat (HDI), 1-Isocyanato-3,3,5-trimethyl-5-isocyanatomethylcyclohexan (IPDI). Xylylendi-isocyanat (XDI), Tetramethylxylylendiisocyanat (TMXDI), 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren isomerengemische, Cyclohexyldiisocyanat (CHDI), Hexahydroxylylendiisocyanat (HXDI), m-Xylylendiisocyanat (XDI), Naphthalindiisocyanat (NDI) oder Bitoluylendiisocyanat (TODI). Die Menge wird so gewählt, dass ein NCO-terminiertes Prepolymer erhalten wird.

In einer Ausführungsform der Erfindung werden diese NCO-Gruppen haltigen Umsetzungsprodukte anschließend mit Silanen umgesetzt, die zusätzlich zu einer nucleophilen Gruppe hydrolisierbare Silangruppen enthalten.

Als geeignete Silane werden organofunktionelle Silane wie hydroxyfunktionelle, mercaptofunktionelle oder aminofunktionelle Silane der allgemeinen Formel

Nu-(Alkyl-Si(R²)ₐ(OR¹)_{b})_{c},

mit Nu = NH, NH₂, SH, OH
Alkyl = C₁, C₂, C₃, C₄, C₆, linear oder verzweigt oder cycloalkyl
R² = Methyl, Ethyl, Propyl, Butyl,
a = 0,1,
R¹ = Alkylrest mit 1 bis 20 C-Atomen oder H
b = 2, 3,
c =1, 2
eingesetzt. Die Silangruppe sollen mindestens eine bevorzugt zwei oder drei hydrolysierbare Reste enthalten. Insbesondere sind C₁ bis C₆ -Alkohole oder OH-Gruppen geeignet. Diese Reste können entweder ausschließlich oder gemischt am Siliziumatom enthalten sein. Es können zusätzlich 0 oder 1 Alkylgruppe am Siliziumatom enthalten sein, insbesondere Methyl-, Ethyl-, Propyl- oder Butylgruppen. Insbesondere sind Tri- oder Dialkoxysilane mit Methoxy-, Ethoxy-, Propoxy- oder Butoxygruppen geeignet.

Beispiele für mercaptofunktionelle Silane sind 3-Mercaptopropyltrimethoxysilan, 3-Mercaptopropyltrimethoxysilan oder die entsprechenden Alkyldimethoxy- oder Alkyldiethoxy-Verbindungen. Beispiele für aminofunktionelle Silane sind 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-(2-Aminoethyl)-3-aminopropyltrimethoxysilan (DAMO), N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-Aminoethyl)-3-aminopropyltrimethoxy-silan, N,N-Di(2-Aminoethyl)-3-aminopropyltriethoxysilan, N,N-Di(2-Aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-amino propyltrimethoxysilan, N-(2-Aminoethyl)-N'-(2-aminoethyl)-3-aminopropyltriethoxy silan, N-(2-Aminoethyl)-N'-(2-aminoethyl)-3-aminopropylmethyldimethoxysilan, N-(2-Aminoethyl)-N'-(2-aminoethyl)-3-aminopropylmethyldiethoxysilan, Bis-(Triethoxy silylpropyl)-amin, Bis-(Trimethoxysilylpropyl)-amin, N-(2-Aminobotyl)-3-aminopropyltriethoxysilan, N-(2-Aminobutyl)-3-aminopropyltrimethoxysilan, N-(n-Butyl)-3-aminopropyltrimethoxysilan, N-(n-Butyl)-3-aminopropyltriethoxysilan, N-(n-Butyl)-3-aminopropylalkoxydiethoxysilan, 3-Hydroxypropyltrimethoxysilan, 3-Hydroxypropyltriethoxysilan, 4-Hydroxybutyltrimethoxysilan, oder Mischungen daraus sowie entsprechende Verbindungen, die anstelle der jeweiligen Propylgruppe eine andere Alkylgruppe tragen. Eine bevorzugte Ausführungsform setzt zur Umsetzung mit den Isocyanatprepolymeren Aminosilane ein, insbesondere α-funktionalisierte Silane, besonders bevorzugt α-Aminosilane. Es können auch Gemische mehrerer Silane eingesetzt werden.

Die Menge der umzusetzenden Silanverbindungen wird so ausgewählt, dass alle Isocyanatgruppen des Prepolymeren mit einer nucleophilen Gruppe der Silanverbindung reagiert haben. Es ist möglich, dass ein geringer Überschuss an nucleophilen Silanen eingesetzt wird. So kann sichergestellt werden dass keine freien Isocyanatgruppen in den Silan-terminierten Prepolymeren vorhanden sind. Ein zu großer Überschuss an Silanen soll vermieden werden, um den Gehalt an niedermolekularen Verbindungen gering zu halten.

Eine andere Ausführungsform der Erfindung setzt die oben als Polymerrückgrat beschriebenen OH-funktionellen Polyester mit Silanen um, gemäß der oben angegebenen Formel mit der Maßgabe, dass Nu eine Isocyanatgruppe ist. Dabei enthält diese Silan-Verbindung dann hydrolysierbare Gruppen und eine Isocyanatgruppe. Beispiele für solche Silane sind Trimethoxysilylpropylisocyanat, Trimethoxysilylpentylisocyanat, Trimethoxysilylbuthylisocyanat oder die entsprechenden Triethyoxy oder Tripropoxyverbindungen. Ebenfalls sind die entsprechenden Dialkoxyalkylsilyl-Isocyanatverbindungen geeignet.

Die Menge der Isocyanato-Silanverbindungen wird so gewählt, dass die molare Menge der Isocyanatgruppen der molaren Menge der OH-Gruppen des hydroxyfunktionellen Polyols entspricht Es werden in diesem Fall ebenso Silanfunktionelle Prepolymere erhalten.

Eine weitere Ausführungsform wählt als Polymerrückgrat die oben angegebenen Polymere so aus, dass diese funktionelle Gruppen enthalten, die mit Silanverbindungen reagieren können, die zusätzlich zu den hydrolysierbaren Gruppen noch eine Epoxygruppe oder eine Anhydridgruppe aufweisen. Dabei werden die Polymere, insbesondere die Polyole, dann über Estergruppen mit den hydrolysierbaren Silangruppen verknüpft.

Erfindungsgemäß geeignete Prepolymere müssen vernetzbare Silangruppen aufweisen. Die Anzahl der hydrolysierbaren Silangruppen pro Molekül soll mindestens zwei und mehr betragen. In einer besonderen Ausführungsform sind die Silangruppen endständig zu der Polymerkette. Die Prepolymere sollen bevorzugt frei von NCO-Gruppen sein.

Die erfindungsgemäßen geeigneten Umsetzungsprodukte sind Prepolymere, die Silangruppen enthalten. Diese Prepolymere weisen im Schnitt zwei oder mehr Urethangruppen auf, bevorzugt zwei bis vier. Die Glasübergangstemperatur der Umsetzungsprodukte in lösemittelfreier Form soll zwischen -40 bis 0°C betragen, insbesondere zwischen -35°C bis -10°C (gemessen mit DSC). Die Glasübergangstemperatur kann durch die Menge der aromatischen Anteile von Polymerrückgrat oder Isocyanat beeinflusst werden. Es hat sich gezeigt, dass Silanreaktive Prepolymere besonders geeignet sind, die auf Basis von Isocyanaten mit aromatischen Kernen hergestellt wurden. Beispiele dafür sind TDI, NDI, 4,4'-MDI, 2,4-MDI, mXDI oder TMXDI umgesetzt mit den Ausgangspolyolen.

Aus den oben beschriebenen Silan-funktionalisierten Prepolymeren können Kaschierklebstoffe formuliert werden. Es ist möglich, dass in diesen Kaschierklebstoffen zusätzliche Bestandteile enthalten sind, wie beispielsweise Lösemittel, Weichmacher, Katalysatoren, Stabilisatoren, Haftvermittler, auch in einer weniger bevorzugten Ausführungsform, Pigmente und Füllstoffe.

Erfindungsgemäß muss der 1-K Kaschierklebstoff zusätzlich Verbindungen enthalten, die funktionelle Gruppen aufweisen, die mit Alkoholen reagieren können. bei ist es bevorzugt, wenn die Reaktion zwischen Alkohol und reaktiver Gruppe der ausgewählten Verbindung eine Additionreaktion ist. Es sollen bei dieser Umsetzung bevorzugt keine niedermolekularen Substanzen frei werden. Insbesondere geeignet als funktionelle Gruppe sind Anhydride von organischen Carbonsäuren. Es kann sich dabei um monomere insbesondere bei 30°C feste Carbonsäureanhydride handeln, beispielsweise wie Maleinsäureanhydrid (MSA), Phthalsäureanhydrid, Trimesinsäureanhydrid oder Derivate solcher Verbindungen. Auch Oligomere von Verbindungen, die mehr als eine organische Anhydridgruppen tragen, können eingesetzt werden.

Eine besondere Ausführungsform der Erfindung verwendet Polymere mit einem Molekulargewicht größer 1000 g/mol, die Anhydridgruppen aufweisen. Geeignete Polymere sind bekannt, insbesondere solche mit MSA-Gruppen. Diese können durch Copolymerisation in die entsprechende Polymere eingebaut werden, es ist auch möglich, dass MSA auf Polymere gepfropft wird. Beispiele für geeignete Copolymere sind Copolymere aus MSA mit Styrol, Vinylacetat oder (Meth)Acrylaten. Beispiele für Copolymere, die mit MSA gepfropft werden können, sind Basispolymere aus Polypropylen, Polystyrol, Polyestern oder Polybutadienen. Diese können nach ihrer Herstellung in polymeranaloger Reaktion mit MSA über bekannte Verfahren gepfropft werden. Der Gehalt an MSA in den geeigneten Polymeren kann unterschiedlich sein, er kann von 3 Mol-% bis zu ca. 60 Mol-% Anhydridgruppen beantragen. Erfindungsgemäß ist es vorteilhaft, wenn höhere Anteile an MSA im Polymeren vorliegen, insbesondere von 10 bis 55 Mol.-%.

Eine besonders bevorzugte Ausführungsform setzt MSA-Styrolcopolymere ein. Diese weisen einen Gehalt an MSA zwischen 20 bis 55 Mol.-% auf. Es handelt sich um feste Substanzen.

Die Menge der Polymere oder Oligomere soll zwischen 1 bis 20 Gew.-% bezogen auf den Kaschierklebstoff betragen, insbesondere zwischen 2 bis 15 Gew.-%. Die Menge kann so gewählt werden, dass die Menge an Anhydridgruppen der Menge der Alkoxygruppen in dem erfindungsgemäßen Klebstoff entspricht. Es kann auch ein Überschuss eingesetzt werden. Auch ggf. zusätzlich vorhandene nucleophile Gruppen tragende niedermolekulare Substanzen, wie Amin-haltige Verbindungen, können mit diesem Bestandteil reagieren.

Als weitere gegebenenfalls im Klebstoff enthaltene Additive können beispielsweise Weichmacher enthalten sein. Geeignete Weichmacher sind beispielsweise medizinische Weißöle, naphtenische Mineralöle, paraffinischen Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate. Als einsetzbaren Stabilisatoren oder Antioxidantien können Phenole, sterisch gehinderte Phenole hohen Molekulargewichts, polyfunktionelle Phenole, schwefel- und phosphorhaltige Phenole oder Amine ausgewählt werden.

Ein erfindungsgemäßer Klebstoff kann auch Pigmente oder Füllstoffe enthalten. Die Mengen sollen von 0 bis 5 Gew.-% betragen. Der Klebstoff soll bevorzugt transparent sein. Deswegen sind insbesondere nano-skalige Füllstoffe geeignet. Es könne auch Füllstoffe ausgewählt werden, die in dem Klebstoff einen geeigneten Brechungsindex aufweisen, sodass ein transparenter oder nur leicht trüber Klebstoff erhalten wird.

Es ist möglich, dem Klebstoff gegebenenfalls zusätzlich Silanverbindungen als Haftvermittler zuzusetzen. Als Haftvermittler können die oben angeführten Silane oder vorzugsweise organofunktionelle Silane wie (meth)acryloxyfunktionelle, epoxyfunktionelle oder nicht reaktiv substituierte Silane eingesetzt werden. In einer bevorzugten Ausführungsform werden dem Klebstoff 0,1 bis 3 Gew.-% solcher Silane zugesetzt. Beispiele dafür sind 3-Acryloxypropyltrialkoxysilan oder 3-Methacryloxypropyltrialkoxysilan; epoxyfunktionelle Silane, wie 3-Glycidyloxymethyltrimethoxysilan, 3-Glycidyloxymethyltriethoxysilan, 2-Glycidoxyethyltrimethoxysilan; Vinyltrimethoxysilan, Alkyltriethoysilan oder entsprechende Di- oder Tri-alkoxyderivate. Diese können gegebenenfalls in das Polymernetzwerk eingebaut werden.

Als gegebenenfalls zusätzlich vorhandenes Additiv kann ein erfindungsgemäß geeigneter Klebstoff auch Katalysatoren enthalten. Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen katalysieren können. Beispiele hierfür sind Titanate, wie Tetrabutyltitanat oder Titantetraacetylacetonat; Wismutverbindungen, wie Bismut-tris-2-ethylhexanoat; Zinncarboxylate, wie Dibutylzinndilaurat (DBTL), Dibutylzinndiacetat oder Dibutylzinndiethylhexanoat, Zinnoxide wie Dibutylzinnoxid und Dioctylzinnoxid; Organoaluminumverbindungen wie Aluminumtrisacetylacetonat; Chelatverbindungen wie Zirconumtetraacetylacetonat; Aminverbindungen oder ihre Salze mit Carbonsäuren, wie Octylamin, Cyclohexylamin, Benzylamin, Dibutylamin, Monoethanolamin, Di- oder Triethanolamin, Triethylamin, Tripropylamin Tributylamin, Diethanolamin, Dipropylamin, Dibutylamin, Diethylentriamin, Triethylentetramin, Triethylendiamin, Guanidin, Morpholin, N-methylmorpholin und 1,8-Diazabicyclo-(5,4,0)-undecen-7 (DBU), Silanverbindungen mit Aminogruppen. Der Katalysator oder Mischungen werden in einer Menge von 0,01 bis etwa 5 Gew.-% bezogen auf das Gesamtgewicht der Zubereitung eingesetzt. Bevorzugt sind 0,05 bis 4 Gew.-%, besonders bevorzugt von 0,2 bis 3 Gew.-% Katalysator. Es ist bevorzugt wenn der Klebstoff keine Zinn-Katalysatoren enthält. Insbesondere können auch andere Schwermetall-haltige Katalysatoren vermieden werden.

Erfindungsgemäß enthalten die Klebstoffe auch Lösemittel. Es handelt sich dabei um die üblichen Lösemittel, die bei Temperaturen bis zu 130°C verdampfen können, insbesondere mit einem Siedepunkt unterhalb 100°C. Die Lösemittel können ausgewählt werden aus der Gruppe der aliphatischen Kohlenwasserstoffe, aromatische Kohlenwasserstoffe, Ketone oder Ester. Die Lösemittel dienen zur Absenkung und Einstellung der Viskosität. Der Anteil der Lösemittel kann in weiten Grenzen variieren, beispielsweise von 19 bis 75 % bezogen auf den Klebstoff. Dabei ist es bekannt, den Klebstoff in einer Lieferform hochviskos einzustellen, er kann dann vor der Applikation mit weiterem Lösemittel auf eine geeignete Viskosität verdünnt werden. Dabei soll die Summe aller Bestandteile 100 % betragen. Zur guten Lagerstabilität ist es zweckmäßig, wenn die erfindungsgemäß eingesetzten Lösemittel nur geringe Anteile oder kein Wasser enthalten.

Die Lösemittel der erfindungsgemäßen Klebstoffe können bei der Herstellung zugesetzt werden. Eine andere Ausführungsform arbeitet jedoch so, dass nur ein Anteil der Lösemittel bei der Herstellung eingesetzt werden, um eine zur Herstellung zweckmäßige Viskosität einzustellen. Ein weiterer Teil der Lösemittel im Rahmen der erfindungsgemäßen Zusammensetzung wird jedoch kurz vor der Verarbeitung dem Klebstoff zugesetzt, um eine geeignete Applikationsviskosität zu erhalten. Bei dieser Ausführungsform ist es möglich, dass zumindest teilweise die Lösemittel, die erst kurz vor der Applikation der Klebstoffs zugesetzt werden, auch organische monofunktionelle Alkohole enthalten. Diese Alkohole sollen gemäß den Anforderungen an die Lösemittel bei einer Temperatur unter 130°C verdampfen. Insbesondere sind Methanol, Ethanol oder Propanol geeignet. Dabei soll die Mengen an Alkohol bezogen auf den gesamten Lösemittelgehalt maximal 50% betragen, insbesondere weniger als 25%.

Es hat sich gezeigt, dass die Verarbeitungsstabilität des Klebstoffs mit den Lösemitteln ausreichend lang ist. Für einen Zeitraum bis zu 6 Stunden können die verdünnten Klebstoffe verarbeitet werden, ohne dass sich die Reaktivität bei der Vernetzung wesentlich ändert. Da die Lösemittel bei der Applikation verdampfen, ist die Wirkungsweise des erfindungsgemäße Klebstoffs nicht beeinträchtigt.

Die Viskosität der Kaschierklebstoffe soll bei Auftragstemperatur gering sein. Diese kann bis 45°C betragen, insbesondere bis 35°C. Die Viskosität der geeigneten Kaschierklebstoffe soll zwischen 50 bis 20000 mPas gemessen bei 15 bis 45°C betragen, bevorzugt 100 bis 5000 mPas, (gemessen nach Brookfield, gemäß ISO 2555). Zur Applikation wird der Klebstoff meistens mit Lösemittel verdünnt. Dabei kann die Viskosität von ca. 50 m Pas bis zu 800 mPas (bei 20 bis 45°C) betragen Anwendungstechnische Messungen sollen zwischen 12 bis 28 Sekunden (Ford cup. 4 mm, ASTM D 1200) betragen. Der Festkörper in der Applikationsform liegt bevorzugt zwischen 15 bis 60 %, besonders bevorzugt 30 bis 50 Gew.-%. Da eine schnelle Weiterverarbeitung notwendig ist, sollen die Klebstoffe rasch vernetzen und eine gute Kohäsion und Adhäsion aufbauen. Erfindungsgemäß ist eine Vernetzung des aufgetragenen Klebstoffs auch bei nur einer geringen Feuchtigkeit der zu verklebenden Substrate möglich. Das kann auch durch einen Anteil Feuchtigkeit im Klebstoff unterstützt werden.

Die erfindungsgemäßen Klebstoffe sind lagerstabil. Es ist üblich, eine lösemittelarme Form zu lagern. Diese kann dabei eine höhere Viskosität aufweisen. In einer Ausführungsform ist es möglich, diese lösemittelreduzierten Kaschierklebstoffe zur die Applikation zu erwärmen und danach aufzutragen. In einer anderen Ausführungsform wird der Klebstoff bei der Anwendung auf eine niedrige Viskosität mit Lösemitteln verdünnt und dann aufgetragen.

Besondere Ausführungsformen des erfindungsgemäßen Klebestoffs umfassen:
- 1-K-Klebstoffe, wobei das Polyesterpropolymer hergestellt wird aus Polyesterpolyolen umgesetzt mit einem molaren Überschuss an Diisocyanaten zu NCO-Polyesterprepolymeren, mit anschließender Umsetzung aller NCO-Gruppen des NCO- Prepolymeren mit bifunktionellen Silanverbindungen, die Alkoxygruppen und eine nucleophile Gruppe enthalten.
- 1-K-Klebstoffe, wobei das Prepolymer hergestellt wird aus Polyesterpolyolen umgesetzt mit NCO-substituierten Alkyl-Alkoxysilanen.
- 1-K-Klebstoffe, wobei zusätzlich Alkoxysilane als Haftvermittler enthalten sind.
- 1-K-Klebstoffe, wobei die Menge der Alkohole im gesamten Lösemittel weniger als 50 Gew.% beträgt.
- 1-K-Klebstoff, die keine NCO-Gruppen aufweisen.

Ein weiterer Gegenstand der Erfindung ist die Verwendung der erfindungsgemäßen vernetzbaren Silan-funktionalisierten Klebstoffe zur Herstellung von Mehrschichtfolien. Als Folienmaterialien zum Herstellen von Mehrschichtfolien können die bekannten flexiblen Folien eingesetzt werden. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, organische Polymere, wie Cellophan, es sind auch Metallfolien oder Papier als Substrate möglich. Dabei könne die Folienmaterialen auch modifiziert sein, z.B. durch Modifizieren der Polymere mit funktionellen Gruppen, durch Metall- oder Oxidbeschichtungen, oder es können zusätzliche Komponenten, beispielsweise Pigmente, Farbstoffe, oder geschäumte Schichten in der Folie enthalten sein. Es kann sich um gefärbte, bedruckte, farblose oder transparente Folien handeln.

Bei der erfindungsgemäßen Verwendung werden zwei oder mehrere, gleiche oder insbesondere unterschiedliche Folien mit einem erfindungsgemäß geeigneten 1 K-Klebstoff miteinander verklebt. Dabei kann bei einer Ausführungsform der Erfindung eine Folie vor Auftrag des Kaschierklebstoffs bereits farbig bedruckt sein. Auf die gegebenenfalls vorbehandelte Folie wird dann ein erfindungsgemäßer flüssiger Kaschierklebstoff aufgetragen. Das kann durch an sich bekannte Druckverfahren, z. B. mit Rasterwalzen, Glattwalzen, erfolgen, der Klebstoff wird über Düsen aufgesprüht oder es wird der Klebstoff über Schlitzdüsen aufgetragen. Das Auftragsverfahren ist in Abhängigkeit von der Viskosität des Klebstoffs auszuwählen.

Durch die Auswahl der erfindungsgemäßen vernetzbaren 1 K-Kaschierklebstoffe ist es möglich, eine niedrige Applikationsviskosität zu erhalten. Dabei weist der erfindungsgemäß geeignete Klebstoff eine niedrige Viskosität auf, deswegen ist ein Auftrag in dünner Schichtstärke von 1 bis 25 µm, insbesondere von 2 bis 15 µm möglich.

Die Herstellung der Mehrschichtfolie erfolgt durch Zusammenfügen einer mit dem Klebstoff beschichteten Folie und einer zweiten Folie. Ein Verkleben von zwei beschichteten Folien ist möglich, aber weniger bevorzugt. Das Verkleben kann unter Druck und erhöhter Temperatur erfolgen. Gegebenenfalls können auch mehrere Folien miteinander verklebt werden. Solche Kaschierverfahren sind dem Fachmann bekannt.

Der erfindungsgemäße Klebstoff kann insbesondere als Kaschierklebstoff eingesetzt werden. Dabei werden die Klebstoffe in dünner Schicht auf eine Folie aufgetragen. Unmittelbar danach verdampfen die enthaltenen Lösemittel, danach wird eine zweite Folie auf die Klebstoffschicht aufgebracht und mit Druck verpresst. Durch die erfindungsgemäße Zusammensetzung ist es gegebenenfalls auch möglich, anteilig niedermolekulare Alkohole als Lösemittel einzusetzen, beispielsweise Methanol, Ethanol oder Propanol. Diese sind lebensmittelrechtlich weniger bedenklich ist als andere Lösemittel. Die Alkohole verdampfen bei dem Auftragsprozess schnell. Nur geringe Mengen an restlichen Alkoholen oder solche aus der Vernetzungsreaktion werden durch das vorhandene Oligomer/Polymer mit Anhydridgruppen abgefangen. Durch die erfindungsgemäße Arbeitsweise können dadurch andere Lösemittel reduziert und vermieden werden.

Durch die Auswahl der Vernetzung über Alkoxysilan-Gruppen ist es möglich, dass der Klebstoff schnell vernetzt. Dabei entstehen durch die Reaktion keine Blasen, die bei Klebstoffen auf Isocyanat-Basis bei hochreaktiven Systemen nur schlecht zu vermeiden sind. Die erfindungsgemäßen Klebstoffe haben den Vorteil, dass die notwendigen Lösemittel nicht getrocknet werden müssen. Damit wird Herstellung, Lagerung und Applikationsverfahren der erfindungsgemäßen Klebstoffe vereinfacht. Ein weiterer Vorteil des erfindungsgemäßen Kaschierklebstoffs ist die gute Flexibilität. Es hat sich gezeigt, dass der erfindungsgemäße Klebstoff eine vorbestimmte Tg aufweist. Diese Klebstoffe zeigen auch vor der Vernetzung schon eine gute Kohäsion der verklebten Mehrschichtfolien.

Dabei soll die Tg des vernetzten Klebstoffs zwischen -15 bis +30°C betragen, insbesondere zwischen -10 bis +20°C. Als lösemittelfreier vernetzter Zustand soll eine Probe des vollständigen Klebstoffs von weniger als 0,5 g angesehen werden, die mit einer Heizrate von 10 K pro Minute von 0 auf 200°C geheizt wurde. Danach kann die Tg des vernetzten Materials mittels DSC (differential scanning calorimetry) bestimmt werden.

Durch die Auswahl der Silan-funktionellen Prepolymere wird gleichzeitig sichergestellt, dass eine gute Soforthaftung zwischen den verklebten Folien möglich ist. Die Lösemittel verdampfen bei dem Auftragsverfahren. Bei der Vernetzung der erfindungsgemäßen 1 K-Klebstoffe entstehen Alkohole. Diese reagieren langsam mit den vorhandenen zusätzlichen Polymeren/Oligomeren mit MSA-Gruppen, damit wird der Gehalt an verdampfbaren, extrahierbaren oder migrierbaren Alkoholen deutlich gesenkt. Die Vernetzungsgeschwindigkeit wird durch die zusätzlichen Polymere positiv beeinflusst, Alkohole werden aus dem Reaktionssystem entfernt.

Ebenfalls Gegenstand der Erfindung ist eine Mehrschichtfolie, die mit einem erfindungsgemäß geeigneten Kaschierklebstoff verklebt ist, dabei können als Substrate die bekannten Kunststofffolien eingesetzt werden, beispielsweise von Polypropylen, Polyethylen, Polyester, PVC, Polyamid oder andere. Auf diese Folie wird mit einem erfindungsgemäßen Klebstoff eine kontinuierliche Schicht erzeugt, die unmittelbar nach dem Auftragen mit einer zweiten gleichen oder unterschiedlichen Folie verklebt wird. Zusätzlich zu den Zweischichtfolien ist es ebenso möglich, mit weiteren Arbeitsschritten eine Mehrschichtfolie zu erzeugen. Eine erfindungsgemäße Ausführungsform verklebt durchsichtige Folien, dafür ist es zweckmäßig wenn der erfindungsgemäße Klebstoff ebenfalls durchsichtig und nicht verfärbt ist.

Es können in diesen Mehrschichtfolien auch andere Schichten enthalten sein, beispielsweise aus Papier, Metallfilmen oder andere Barriereschichten. Diese Mehrschichtfolien können nach der Verklebung rasch weiterverarbeitet werden, da eine hohe Anfangshaftung und eine schnelle Vernetzung gegeben ist. Eine aufwendige Lagerung, um Vernetzung oder Nebenreaktion abzuwarten, kann entfallen.

Der erfindungsgemäße Klebstoff zeigt eine gute Haftung zwischen den unterschiedlichen Schichten. Er ist insbesondere farblos und durchsichtig. Er zeigt keine Blasen oder Fehlstellen in der Klebstoffschicht. Deswegen ist er speziell als Kaschierklebstoff zum Verkleben von flexiblen folienförmigen Substraten geeignet. Weiterhin werden die bei der Vernetzung entstehenden Alkohole durch die anhydridgruppenhaltigen Polymere abgefangen. Dabei entstehen hochmolekulare Umsetzungsprodukte, diese sind nicht migrationsfähig. Also werden vernetzte Klebstoffschichten erhalten, die nur geringe Anteile an migrationsfähigen Substanzen enthalten. Solche Mehrschichtfolien sind deswegen insbesondere für die Verpackungsindustrie geeignet, beispielsweise zur Herstellung von Verpackungen von Lebensmitteln oder medizinischen Produkten.

### Beispiele

### Beispiel Polyester 1:

Es wird ein Polyester aus Adipinsäure und Isophthalsäure zusammen mit Ethylenglykol hergestellt.

Der Polyester hat ein Molekulargewicht von ca. 2000 g/mol . Die OH-Zahl beträgt ca. 58, die Säurezahl ist kleiner 2.

### Beispiel Polyester 2:

Es wird ein Polyester aus Adipinsäure, Isophthalsäure, Azelainsäure und Phthalsäure zusammen mit Diethylenglykol, Ethylenglykol, Propylenglykol und Neopentylglycol hergestellt.

Der Polyester weist ein Molekulargewicht von 5100 g/mol auf. Die OH-Zahl des Polyesters beträgt ca. 22.

### Klebstoffbeispiele

### Beispiel 3a:

51,5 Teile des Polyesters 1 werden in 38,5 Teile Ethylacetat gelöst und danach mit 6 Teilen TDI 80 umgesetzt. Danach werden 4,3 Teile Bis(3-triethoxysilyl-propyl)amin zugesetzt.

Das entstehende Produkt weist ein Festkörper von 62 % auf. Es enthält keine weiteren Isocyanatgruppen. Die Viskosität beträgt ca. 1400 mPas (20 °C). Die Tg (vernetzt) beträgt -2°C.

### Beispiel 3b:

Zu dem Klebstoff aus Beispiel 3a werde 1,6 Teile (ca. 2,5 % auf Festkörper) eines Styrolcopolymere enthaltend ca. 50 Gew.% MSA-Bausteine zugesetzt und homogenisiert.

### Beispiel 4a:

63,0 Teile des Polyesters 2 werden in 30,0 Teile Ethylacetat gelöst und danach mit 3,45 Teilen TDI 100 sowie 4,15 Teilen Bis(3-triethoxysilylpropyl) amin umgesetzt.

Das entstehende Produkt weist ein Festkörper von 70 % auf. Es enthält keine weiteren Isocyanatgruppen. Die Viskosität beträgt ca. 7750 mPas (20 °C).

Die Tg (vernetzt) beträgt +4°C.

### Beispiel 4b:

Zu dem Klebstoff aus Beispiel 4a werde 1,7 Teile (ca. 2,5 % auf Festkörper) eines Styrolcopolymere enthaltend ca. 50 Gew.% MSA-Bausteine zugesetzt und homogenisiert.

### Beispiel 5a:

61,2 Teile des Polyesters 2 werden in 34,5 Teile Ethylacetat gelöst und danach mit 5,0 Teilen TDI 100 sowie 1,4 Teilen N-Cyclohexylaminomethylmethyldiethoxysilan umgesetzt. Das entstehende Produkt weist ein Festkörper von 65 % auf. Es enthält keine weiteren Isocyanatgruppen. Die Viskosität beträgt ca. 6700 mPas (20 °C).

### Beispiel 5b:

Zu dem Klebstoff aus Beispiel 5a werde 3,5 Teile (ca. 5% auf Festkörper) eines Styrolcopolymere enthaltend ca. 50 Gew.% MSA-Bausteine zugesetzt und homogenisiert. Die Viskosität beträgt ca. 6800 mPas (20 °C).

### Beispiel 5c:

Zu dem Klebstoff aus Beispiel 5a werde 2 Teile (ca. 3% auf Festkörper) Phthalsäureanhydrid zugesetzt und homogenisiert. Die Viskosität beträgt ca. 6700 mPas (20 °C).

Alle Klebstoffe werden vor der Applikation mit Ethylacetat verdünnt (Reihe 1) auf eine Festkörper von ca. 31%.
Dabei beträgt die Viskosität unter 800 mPas (20°C).
Die Klebstoffe der Beispiele 3a, 3b, 5a, 5b werden mit einem Gemisch Ethylacetat/Ethanol so verdünnt, dass insgesamt 10% Ethanol im Lösemittel enthalten sind (Reihe 2), Festkörper ca. 33%.

### Verklebung:

Es werden Folien auf Basis von Polyethylen (PE) mit einem Rakel mit den erfindungsgemäßen Klebstoffen der Versuchsreihe 1 beschichtet. Die Schichtstärke beträgt 5 µm.

Eine andere Folie wird analog mit einer Schichtstärke von 10 µm beschichtet. Die beschichtete Oberfläche wird ca. 1 min. abgelüftet bei 30°C. Danach wird auf die jeweils beschichtete Folie eine zweite Folie auf Basis OPP mit einer Walze aufgequetscht.

Es werden PET Folien mit einem Rakel mit Klebstoff der Versuchsreihe 2 mit einer Schichtstärke von 3 g/m² beschichtet. Nach dem Ablüften werden diese Folien mit einer Al-Folie verklebt.

Nach 6 Tagen und nach 14 Tagen wird die Verklebung der Foliensubstrate bestimmt. Es ist in allen Fällen eine gute Haftung miteinander festzustellen.

Aus den verklebten Folien wird mittels Headspace GC nach 24 Std. der Gehalt an Ethylacetat und an Ethanol bestimmt.

| Beispiele (Reihe 1) | EtOH | EtOAc | |
|---|---|---|---|
| 3a | 30 | 2 | mg/m² |
| 3b | 5 | 2 | |
| 4a | 20 | 2 | |
| 4b | 7 | 2 | |
| 5a | 15 | 2 | |
| 5b | 5 | 2 | |

Die Versuche zeigen, dass mit Zusatz des MSA-haltigen Bestandteile der Alkoholgehalt vermindert wird.

| Beispiele (Reihe 2) | EtOH | EtOAc |
|---|---|---|
| 3a (verkleben sofort nach Mischen) | 50 | 3 mg/m² |
| 3b | 15 | 2 |
| 3a (verkleben 2 Std. nach Mischen) | 50 | 3 mg/m² |
| 3b | 14 | 3 |
| 3a (verkleben 4 Std. nach Mischen) | 40 | 3 mg/m² |
| 3b | 16 | 3 |
| 3a (verkleben 24 Std. nach Mischen) | 34 | 4 mg/m² |
| 3b | 12 | 2 |
| 5b (verkleben sofort nach Mischen) | 50 | 3 |
| 5a | 14 | 3 |
| 5b (verkleben 24 Std. nach Mischen) | 45 | 3 |
| 5a | 14 | 3 |

Die Versuche zeigen, dass mit einem Anteil EtOH im Lösemittel trotzdem die gemessenen Werte in der verklebten Folie vermindert werden. Auch eine ausreichend lange Stabilität dieser Klebstoffe zur Verarbeitung ist gegeben, wobei der Effekt der Verminderung von Alkoholen erhalten bleibt.

## Patentansprüche

1. Vernetzbarer 1-Komponenten-Kaschierklebstoff enthaltend
a) 25 bis 80 Gew- % Polyesterprepolymere und /oder Polyurethanprepolymere, die mindestens zwei vernetzbare Alkoxysilangruppen aufweisen und das Prepolymer ein Molekulargewicht von 2000 bis 30000 g/mol besitzt, wobei mindestens 50 % Prepolymere auf Basis von Polyesterpolyolen enthalten sind,
b) 75 bis 19 Gew-% organische Lösemittel mit einem Siedepunkt bis 130°C,
c) 1 bis 20 Gew.-% Polymere, Oligomere und/oder Monomere, die eine oder mehrere Anhydridgruppen enthalten,
d) 0 bis 15 Gew-% Additive,
wobei die Viskosität des Klebstoffs zwischen 50 bis 20000 mPas (nach DIN ISO 2555) beträgt, gemessen bei 15 bis 45°C und die Summe aller Bestandteile 100 % betragen soll.

2. 1-K-Klebstoff nach Anspruch 1, **dadurch gekennzeichnet, dass** das Polyesterprepolymer oder Polyurethanprepolymer hergestellt wird aus Polyesterpolyolen mit einem zahlenmittleren Molekulargewicht M_{N}, bestimmt mittels GPC, von 400 bis 25000 g/mol, die mindestens zwei OH-Gruppen aufweisen.

3. 1-K-Klebstoff nach einem der Ansprüche 1 oder 2, **dadurch gekennzeichnet, dass** das Prepolymere Trialkoxysilangruppen enthält, insbesondere Triethoxysilangruppen oder Trimethoxysilangruppen.

4. 1K-Klebstoff nach einem der Ansprüche 1 bis 3, **dadurch gekennzeichnet, dass** die Polymere, Oligomere und/oder Monomere mit Anhydridgruppen bei 25°C feste Verbindungen sind.

5. 1K-Klebstoff nach Anspruch 4, **dadurch gekennzeichnet, dass** die Polymere, Oligomere und/oder Monomere cyclische Anhydridgruppe aufweisen.

6. 1-K-Klebstoff nach Anspruch 4 oder 5, **dadurch gekennzeichnet, dass** der Klebstoff 2 bis 15 Gew-% Polymere mit Maleinsäureanhydrid (MSA)-Gruppen enthält, insbesondere als MSA-Styrolcopolymere oder als MSA-(Meth)Acrylat-copolymere.

7. 1-K-Klebstoff nach Anspruch 4 bis 6, **dadurch gekennzeichnet, dass** das MSA-Polymer 5 bis 60 Mol-% Anhydridgruppen enthält.

8. 1-K-Klebstoff nach einem der Ansprüche 1 bis 7, **dadurch gekennzeichnet, dass** die Glasübergangstemperatur (T_{g}) des vernetzten Klebstoffs, bestimmt mittels DSC, zwischen -15 bis +30°C beträgt.

9. 1-K-Klebstoff nach einem der Ansprüche 1 bis 8, **dadurch gekennzeichnet, dass** der Klebstoff keine Zinn-Katalysatoren enthält.

10. Verfahren zum Verkleben von Foliensubstraten, wobei ein 1 K-Klebstoff nach einem der Ansprüche 1 bis 9 eingesetzt wird, der vor der Applikation mit Lösemittel, die C1 bis C6 Alkohole enthalten, in der Viskosität eingestellt wird, umfassend die Schritte Auftragen und Ablüften des Klebstoffs auf ein Substrat und anschließendes Verkleben mit einer zweiten Folie.

11. Verwendung von 1-K-Klebstoffen nach einem der Ansprüche 1 bis 9 zum Verkleben von flexiblen folienförmigen Substraten.

12. Verwendung nach Anspruch 11 zur Herstellung von Mehrschichtfolien aus Polymerfolien, Papierfolien, Metallfolien sowie Oberflächen-behandelten Folien.

## Claims

1. A crosslinkable one-component laminating-adhesive containing
a) from 25 to 80 wt.% polyester prepolymers and/or polyurethane prepolymers that comprise at least two crosslinkable alkoxysilane groups, and the prepolymer has a molecular weight of from 2000 to 30,000 g/mol, wherein it contains at least 50 % prepolymers based on polyesterpolyols,
b) from 75 to 19 wt.% organic solvents having a boiling point of up to 130°C,
c) from 1 to 20 wt.% polymers, oligomers and/or monomers that contain one or more anhydride groups,
d) from 0 to 15 wt.% additives,
wherein the viscosity of the adhesive is between 50 and 20,000 mPas (according to DIN ISO 2555), measured at from 15 to 45°C and the sum of all the components should be 100%.

2. The one-component adhesive according to claim 1, **characterized in that** the polyester prepolymer or polyurethane prepolymer is produced from polyester polyols having a number average molecular weight M_{N}, determined by GPC, of from 400 to 25,000 g/mol and comprising at least two OH groups.

3. The one-component adhesive according to one of claims 1 or 2, **characterized in that** the prepolymers contain trialkoxysilane groups, in particular triethoxysilane groups or trimethoxysilane groups.

4. The one-component adhesive according to one of claims 1 to 3, **characterized in that** the polymers, oligomers and/or monomers comprising anhydride groups are solid compounds at 25°C.

5. The one-component adhesive according to claim 4, **characterized in that** the polymers, oligomers and/or monomers comprise cyclic anhydride groups.

6. The one-component adhesive according to claim 4 or 5, **characterized in that** the adhesive contains from 2 to 15 wt.% polymers comprising maleic anhydride (MA) groups, in particular in the form of MA styrene copolymers or MA (meth)acrylate copolymers.

7. The one-component adhesive according to claims 4 to 6, **characterized in that** the MA polymer contains from 5 to 60 mol.% anhydride groups.

8. The one-component adhesive according to one of claims 1 to 7, **characterized in that** the glass transition temperature (T_{g}), determined by DSC, of the crosslinked adhesive is between -15 and +30°C.

9. The one-component adhesive according to one of claims 1 to 8, **characterized in that** the adhesive does not contain tin catalysts.

10. A method for bonding film substrates, wherein a one-component adhesive according to one of claims 1 to 9 is used, the viscosity of which is adjusted, prior to the application, by means of solvents that contain C1 to C6 alcohols, which method comprises the steps of applying and evaporating the adhesive on a substrate and subsequent bonding to a second film.

11. The use of one-component adhesives according to one of claims 1 to 9 for bonding flexible film-like substrates.

12. The use according to claim 11 for producing multilayer films from polymer films, paper films, metal films and surface-treated films.

## Revendications

1. Colle de pelliculage réticulable monocomposante contenant :
a) 25 à 80 % en poids de prépolymères de polyester et/ou de prépolymères de polyuréthane, possédant au moins deux groupes réticulables alcoxysilanes, et le prépolymère possédant un poids moléculaire de 2 000 à 30 000 g/mol, où au moins 50 % du prépolymère est contenu à base de polyols de polyester,
b) 75 à 19 % en poids de solvants organiques avec un point d'ébullition jusqu'à 130°C,
c) 1 à 20 % en poids de polymères, oligomères et/ou monomères contenant au moins un groupe anhydride,
d) 0 à 15 % en poids d'additifs,
la viscosité de la colle étant entre 50 et 20 000 mPa.s (selon la norme DIN ISO 2555) mesurée à entre 15 et 45°C et la somme de tous les composant devant être de 100 %.

2. Colle monocomposante selon la revendication 1, **caractérisée en ce que** le prépolymère de polyester et/ou de polyuréthane est fabriqué à partir de polyols de polyester avec un poids moléculaire moyen en nombre M_{N} de 400 à 25 000 g/mol, estimé par CPG, présentant au moins deux groupes -OH.

3. Colle monocomposante selon la revendication 1 ou 2, **caractérisée en ce que** le prépolymère contient des groupes trialcoxysilanes, en particulier des groupes triéthoxysilane ou triméthoxysilane.

4. Colle monocomposante selon une des revendications 1 à 3, **caractérisée en ce que** les polymères, oligomères et/ou monomères sont des composés solides à 25°C avec des groupements anhydrides.

5. Colle monocomposante selon la revendication 4, **caractérisée en ce que** les polymères, oligomères et/ou monomères présentent des groupements anhydrides cycliques.

6. Colle monocomposante selon une des revendications 4 ou 5, **caractérisée en ce que** la colle contient 2 à 15 % en poids de polymères comportant des groupements anhydride maléique (MSA), en particulier des copolymères MSA-styrène ou MSA-(méth)acrylate.

7. Colle monocomposante selon une des revendications 4 à 6, **caractérisée en ce que** le polymère MSA contient 5 à 60 % en moles de groupements anhydrides.

8. Colle monocomposante selon une des revendications 1 à 7, **caractérisée en ce que** la température de transition vitreuse (T_{g}) de la colle réticulée se situe entre -15 et +30°C, estimé par DSC.

9. Colle monocomposante selon une des revendications 1 à 8, **caractérisée en ce que** la colle ne contient pas de catalyseur à l'étain.

10. Procédé d'encollage de feuilles de substrat, dans lequel on utilise une colle monocomposante selon une des revendications 1 à 9, où on ajuste la viscosité avant application avec un solvant contenant des C₁₋₆-alcools, comprenant les étapes d'application et d'évaporation de la colle sur un substrat, puis d'encollage avec une deuxième feuille.

11. Utilisation de colles monocomposantes selon une des revendications 1 à 9 pour l'encollage de substrats souples en forme de feuilles.

12. Utilisation selon la revendication 11 pour la fabrication de feuilles multicouches de feuilles de polymères, feuilles de papier, feuilles de métal ainsi que de feuilles à traitement de surface.
